# EUROPÄISCHE PATENTANMELDUNG

(11) **EP 1 557 539 A1**
(43) Veröffentlichungstag der Anmeldung: **27.07.2005**
(21) Anmeldenummer: 04001241.1
(22) Anmeldetag: 21.01.2004
(51) Int. Cl.: F01D 25/00, F02C 7/143, F02C 3/30

(54) **Verfahren und Anordnung zur Leistungs- und Wirkungsgraderhöhung in einer Gasturbinenanlage, sowie Gasturbinenanlage**

(71) Anmelder: SIEMENS AKTIENGESELLSCHAFT, 80333 München (DE)
(72) Erfinder: Granser, Dietmar, Dr., 45475 Mülheim (DE)

(57) **Zusammenfassung**

Die Erfindung bezieht sich auf ein Verfahren zur Leistungs- und Wirkungsgraderhöhung in einer Gasturbinenanlage (1), bei dem eine Flüssigkeit in die Ansaugluft (2) eines Verdichters (10) der Gasturbinenanlage (1) eingespritzt wird. Um möglichst kleine Tropfendurchmesser zu erreichen, wird vorgeschlagen, dass die Flüssigkeit eine Oberflächenspannung vermindernde Substanz enthält. Die Erfindung führt auch auf eine Anordnung (3, 5) zum Einspritzen von Flüssigkeit in die Ansaugluft (2) eines Verdichters (10) einer Gasturbinenanlage (1).

## Beschreibung

Die Erfindung bezieht sich auf ein Verfahren für eine Gasturbinenanlage, bei dem in die Ansaugluft eines Verdichters der Gasturbinenanlage eine Flüssigkeit eingespritzt wird. Die Erfindung bezieht sich auch auf eine Anordnung zum Einspritzen von Flüssigkeit in die Ansaugluft eines Verdichters der Gasturbinenanlage.

Eine Gasturbine ist eine Kraftmaschine, welche die Wärmeenergie eines heißen Gases in mechanische Energie umwandelt Gasturbinen werden in der Technik als Antriebsaggregate, beispielsweise zur Erzeugung von elektrischem Strom, eingesetzt.

Unter einer Gasturbinenanlage versteht man im Allgemeinen nicht nur die Gasturbine allein sondern ein Aggregat aus verschiedenen Bestandteilen. In einem Verdichter wird angesaugte Luft komprimiert. In eine Brennkammer wird Brennstoff eingedüst, mit der Luft gemischt und verbrannt. Dabei saugt der Verdichter eine große Menge Luft an, die, stark komprimiert, als Verbrennungsluft in die Brennkammern strömt. Über Düsen wird Erdgas oder auch Heizöl in die Brennkammer eingedüst und mit der Verbrennungsluft bei gleichbleibendem Druck verbrannt. Bei dieser Verbrennung entstehen Temperaturen von mehr als 1000 °C. Die unter hohem Druck stehenden Verbrennungsgase strömen in die Gasturbine und treiben diese an.

Der Verdichter weist reihenförmig, auf einer Hauptachse angeordnete Schaufelräder auf. Diese bezeichnet man technisch als Laufräder oder auch kurz als Läufer. Im Gehäuse des Verdichters sind feststehende Leiträder angeordnet, welche die in den Laufrädern erzeugte kinetische Energie in Druck umwandeln. Der Verdichter saugt über Schalldämpfer Luft aus dem Freien an und komprimiert die Luft - z. B. bis zu einem Verdichtungsverhältnis von 17. Die komprimierte Luft strömt der hinter dem Verdichter angeordneten Brennkammer zu, die mit mehreren Brennern die Luft durch Verbrennung von Erdgas oder Heizöl, bei modernen Maschinen auf eine Temperatur von über 1400 °C erhitzt. Das heiße Gas strömt von der Brennkammer in die Gasturbine und wird dort entspannt. Die axial austretenden Abgase aus der Gasturbine gelangen über einen Abgaskanal in einen Abhitzekessel oder direkt in einen Kamin. Zum Antrieb von Maschinen (z. B. einem Generator) steht die Differenz aus der von der Gasturbine abgegebenen Leistung abzüglich der dem Verdichter zugeführten Leistung zur Verfügung.

Ziel einer solchen Ausgestaltung einer Gasturbinenanlage ist es, einen möglichst hohen Wirkungsgrad zu erreichen. Der Wirkungsgrad einer Gasturbinenanlage kann durch den Einsatz von Zusatzeinrichtungen wie Rückkühlern und Zwischenkühlern erhöht werden. Allerdings sind solche Zusatzeinrichtungen teuer, und häufig kommen sie aus wirtschaftlichen Überlegungen nicht in Frage.

Ferner ist bekannt, dass zur Erhöhung der Leistung und des Wirkungsgrads einer Gasturbine Wasser in die Ansaugluft eines Verdichters der Gasturbinenanlage eingespritzt wird ("Wet-Compression"). Auf diese Weise wird der Luft zur Verdampfung des Wassers Wärme entzogen und wie bei der Anwendung von Zwischenkühlung die Verdichterleistung abgesenkt. Außerdem wird der Massenstrom in der Gasturbine erhöht. Beim Einspritzen wird die Flüssigkeit zerstäubt und es bilden sich mehr oder weniger große Tropfen. Auf Grund ihrer Trägheit folgen vor allem die größeren Tropfen nur schlecht der Luftströmung und können ungünstigerweise auf die Gehäusewände und Schaufeln treffen und dort Strähnen bilden, wobei sich diese als große Tropfen ablösen und durch Auftreffen auf die nachfolgenden Verdichterschaufeln Erosion an diesen verursachen. Dies führt zu einer Lebensdauerverminderung der Verdichterbeschaufelung. Die vor der Verdichtereinströmung im Verdichteransaughaus an die Wände gelangende Flüssigkeit muss zudem abgeführt werden und ist für den Prozess unwirksam.

Eine Möglichkeit diese Problematik zu verringern, besteht darin, ein Verfahren anzuwenden wie es in den Offenlegungsschriften NL 1009484 und NL 1011383 beschrieben ist. Dabei wird beim Einspritzen des Wassers in die Ansaugluft eines Verdichters überhitztes Wasser verwendet. Beim Zerstäuben werden die zunächst entstehenden Tropfen aufgrund der bei niederem Druck einsetzenden Verdampfung zerrissen, so dass letztendlich kleinere Tropfengrößen entstehen. Zur Erzeugung des überhitzten Wassers werden Zusatzeinrichtungen, wie Wärmetauscher, benötigt oder das Wasser muss dem angeschlossenen Dampfkreislauf bei GUD-Anlagen entnommen werden. Damit erhöhen sich die Anlagenkosten.

Ausgehend von diesem Stand der Technik liegt der Erfindung die Aufgabe zugrunde, ein verbessertes Verfahren bereitzustellen, bei dem der Leistungs- und Wirkungsgrad einer Gasturbinenanlage erhöht ist und eine dazu geeignete Vorrichtung anzugeben.

Die Aufgabe wird gelöst durch ein Verfahren zur Leistungs- und Wirkungsgraderhöhung in einer Gasturbinenanlage, bei dem in eine Ansaugluft eines Verdichters der Gasturbinenanlage eine Flüssigkeit eingespritzt wird, wobei erfindungsgemäß die Flüssigkeit eine Oberflächenspannung vermindernde Substanz enthält. Das Zerstäuben der Flüssigkeit in möglichst feine Tropfen wird durch das Herabsetzen der Oberflächenspannung durch das Beimischen von Oberflächenspannung vermindernden Substanzen erreicht. Die Substanzen werden dabei zu der einzuspritzenden Flüssigkeit gegeben. Unter Oberflächenspannung vermindernden Substanzen im Sinne der Erfindung sind alle grenzflächenaktiven Stoffe zu verstehen. Unter Flüssigkeiten im Sinne der Erfindung sind alle zur Einspritzung in Gasturbinenanlagen, insbesondere im Hinblick auf die Funktion der Gasturbine, einspritzbaren Flüssigkeiten, beispielsweise Wasser, zu verstehen.

Die Erfindung basiert auf dem Gedanken, den Tropfendurchmesser von in die Ansaugluft eines Verdichters der Gasturbinenanlage eingespritzten Flüssigkeiten zu verringern und so die Verteilung des Luft-Flüssigkeitsgemisches möglichst homogen zu gestalten. Je kleiner die eingespritzten Tropfen dabei sind, umso besser folgt der Massenstrom aufgrund der geringen Trägheit der kleineren Tröpfchen der Strömung der Luft und umso geringer ist der Anteil der Tröpfchen die von Wänden und Schaufeln des Verdichters eingefangen werden. Bei gegebener Flüssigkeitsmenge vergrößert sich die gesamte Flüssigkeitsoberfläche durch Erzeugen kleiner Tropfen. Dieser Effekt fördert die vollständige Verdampfung. Die Verwendung von chemischen Substanzen, die den Tropfendurchmesser verringern scheint zunächst grundsätzlich problematisch, da das Flüssigkeits-Luftgemisch bei einer Gasturbinenanlage in die Brennkammer einströmt und zusammen mit dem Brennstoff, wie Gas oder Öl, verbrennend in Reaktion tritt. Überraschenderweise wurde im Rahmen der Erfindung festgestellt, dass sehr wohl aber Oberflächenspannung vermindernde Substanzen zur Verringerung der Tropfendurchmesser verwendet werden können.

Es wurde festgestellt, dass die Lebensdauer der Gasturbinen, insbesondere der Verdichter, verlängert wird, da die Verdichterbeschaufelung einer weniger aggressiven Umgebung ausgesetzt ist. Vorteilhaft ist auch, dass der Zusatz der Oberflächenspannung vermindernden Substanzen bei gleicher eingespritzter Flüssigkeitsmenge zu einer zusätzlichen Erhöhung der Leistung und des Wirkungsgrads der Gasturbinenanlage führt, weil weniger Flüssigkeit vor Eintritt in den Verdichter von den Wänden eingefangen und damit unwirksam wird. Eine Verdichterleistung kann also vermindert, und damit die Leistung und der Wirkungsgrad erhöht werden. Die kleineren Tropfen fördern außerdem die schnellere Verdampfung.

Vorteilhafte Weiterbildungen der Erfindung sind den Unteransprüchen zu entnehmen, die weitere Möglichkeiten angeben, das Verfahren hinsichtlich der Aufgabenstellung zu verbessern.

Besonders geeignete Substanzen sind organische Verbindungen, die sich aus ihrer Lösung an Grenzflächen (z. B. Wasser/Öl) stark anreichern und dadurch die Grenzflächenspannung - im Falle von flüssigen/gasförmigen Systemen die Oberflächenspannung - herabsetzen. Besonders bevorzugt werden Tenside verwendet.

Tenside können alle Substanzen sein, welche die Grenzflächenspannung herabsetzen. Die Tenside können mindestens eine hydrophile und eine hydrophobe funktionelle Gruppe enthalten.

Bei den hydrophilen Anteilen des Tensids handelt es sich meist um polare funktionelle Gruppen während die hydrophoben Teile in der Regel unpolare Kohlenwasserstoff-Reste darstellen.

Die Oberflächenspannung vermindernde Substanz kann ferner eine korrosionsvermindernde Substanz sein oder ein korrosionsverminderndes Additiv enthalten. Die Substanz wird beispielsweise beim Auftreffen von den Grenzflächen absorbiert und bildet einen Schutzfilm, der das Metall gegen Korrosion schützt und die Bildung von Ablagerungen erschwert. Besonders bevorzugt werden Substanzen, die es ermöglichen das gesamte Dampf- und Kondensatnetz zu alkalisieren und die wirksam vor Korrosionen schützen. Besonders gut eignen sich dafür Tenside. Besonders bevorzugt werden auch Mischungen von filmbildenden Polyaminen und dampfflüchtigen, den Kondensat- und Speisewasserbereich alkalisierenden Aminen im Verfahren eingesetzt. Ferner können auch Mischungen von filmbildenden Polyaminen mit Polycarboxylat in wässriger Lösung verwendet werden.

Als besonders zweckmäßig erweisen sich solche Oberflächenspannung vermindernde Substanzen, die Hochtemperatur-Korrosion in der Turbinenbeschaufelung verursachende Reaktionsprodukte bei der Verbrennung vermeiden.

Zweckmäßigerweise handelt es sich bei der Flüssigkeit um Wasser. Dieses kann auch vorzugsweise in einem überhitzten Zustand zugeführt werden.

Vorzugsweise kann die Flüssigkeit beim Einspritzen in die Verdichter-Ansaugluft zerstäubt werden.

Hinsichtlich der Vorrichtung wird die Aufgabe gelöst durch die eingangs genannte Anordnung zum Einspritzen von Flüssigkeit in die Ansaugluft eines Verdichters einer Gasturbinenanlage mit einem Einspritzmittel, einem Flüssigkeitsbehältnis und einer vom Flüssigkeitsbehältnis ausgehenden und zum Einspritzmittel führenden Flüssigkeitszuführung, bei der erfindungsgemäß ein Substanzbehältnis für eine Oberflächenspannung vermindernde Substanz, und eine vom Substanzbehältnis ausgehende Substanzzuführung vorgesehen ist, die geeignet ist, der Flüssigkeit die Oberflächenspannung vermindernde Substanz zuzuführen.

Vorteilhafte Weiterbildungen hinsichtlich der Vorrichtung sind den Unteransprüchen zu entnehmen, welche weitere vorteilhafte Ausgestaltungen der Vorrichtung angeben.

Prinzipiell bestehen mehrere Möglichkeiten, die Substanz der Flüssigkeit zuzuführen. Zu bevorzugen ist, dass die Substanzzuführung zur Flüssigkeitszuführung führt. Je nach Anwendung ist es darüber hinaus ebenfalls möglich, dass die Substanzzuführung zum Flüssigkeitsbehältnis führt und/oder zum Einspritzmittel führt. Im letzteren Fall würde die Oberflächenspannung vermindernde Substanz der Flüssigkeit während des Einspritzvorgangs im Einspritzmittel zugeführt, so dass die Flüssigkeit eine Oberflächenspannung vermindernde Substanz im eingespritzten Zustand enthält.

Vorzugsweise ist das Einspritzmittel in Form einer zwischen einem Ansaughaus und einem Verdichter angeordneten Eindüsanordnung gebildet. Eine besonders bevorzugte Ausführungsform der Eindüsanordnung ist im Zusammenhang mit der Zeichnung im Detail beschrieben.

Alternativ oder zusätzlich kann es je nach Anwendung darüber hinaus auch vorteilhaft sein, das Einspritzmittel in Form einer Leitschaufelkanalisation in einer Leitschaufel eines Verdichters zu bilden. Eine besonders bevorzugte Ausführungsform dieser Weiterbildung ist im Zusammenhang mit der Zeichnung im Detail beschrieben.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Im Einzelnen zeigt die Zeichnung in:

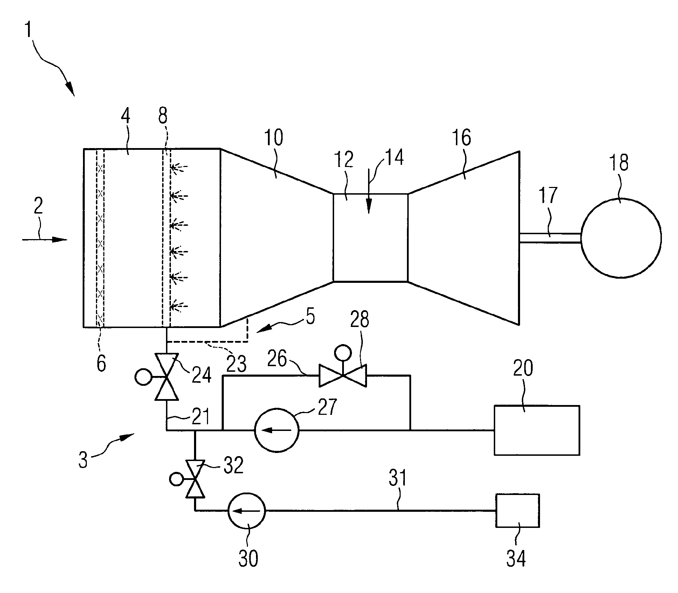

FIG 1 eine Gasturbinenanlage mit einer bevorzugten Ausführungsform einer Anordnung zum Einspritzen von Flüssigkeit in die Ansaugluft eines Verdichters der Gasturbinenanlage.

FIG 1 zeigt eine Gasturbinenanlage 1 mit einer ersten bevorzugten Ausführungsform 3 einer Anordnung zum Einspritzen einer Flüssigkeit in die Ansaugluft eines Verdichters 10 der Gasturbinenanlage 1 und einer weiteren in gestrichelter Form angedeuteten alternativen oder zusätzlichen zweiten bevorzugten Ausführungsform 5 einer Anordnung zum Einspritzen von Flüssigkeit in die Ansaugluft eines Verdichters 10 der Gasturbinenanlage 1.

Die Gasturbinenanlage 1 umfasst zum Ansaugen von Luft 2 zur Verwendung in einer Gasturbine 16 ein Ansaughaus 4, das zur Filterung der Luft 2 mit einem Luftfilter 6 versehen ist. Die Luft 2 wird infolge der weiteren Führung in der Gasturbinenanlage 1 in einem Verdichter 10 je nach Anforderungen und Auslegung der Gasturbine 16 auf einen bestimmten Druck verdichtet und in dieser Form zusammen mit einem Brennstoff, z. B. in Form von Erdgas oder Heizöl, einer Brennkammer 12 zugeführt. In der Brennkammer 12 wird das Brennstoffluftgemisch mit mehreren Brennern auf eine Temperatur von je nach Auslegung der Gasturbine 16 weit oberhalb von 1000 °C erhitzt. Bei modernen Maschinen beträgt die Temperatur in der Regel mehr als 1400 °C. Das auf diese Weise erzeugte heiße Gas strömt von der Brennkammer 12 in die Gasturbine 16 und wird dort unter Abgabe seiner kinetischen Energie über die Turbinenbeschaufelung entspannt. Die hier nicht gezeigte Turbinenbeschaufelung treibt über eine Welle 17 einen Generator 18 an, der an seinem Ausgang elektrische Energie liefert.

Zur Erhöhung der Leistung und des Wirkungsgrads einer Gasturbine ist es vorteilhaft, den Massenstrom durch die Turbine zu erhöhen. Dies wird vorteilhaft dadurch erreicht, dass Wasser in die Ansaugluft 2 des Verdichters 10 der Gasturbinenanlage 1 eingespritzt wird. Im vorliegenden Fall einer besonders bevorzugten Ausführungsform ist gemäß FIG 1 eine Anordnung 3 oder zusätzlich oder alternativ eine Anordnung 5 zum Einspritzen von Flüssigkeit in die Ansaugluft 2 vorgesehen, so dass gemäß dem Konzept der Erfindung die Flüssigkeit eine Oberflächenspannung vermindernde Substanz enthält.

Die Anordnung 3, 5 weist ein noch näher zu erläuterndes Einspritzmittel 4, 10 auf, ein Flüssigkeitsbehältnis 20 und eine vom Flüssigkeitsbehältnis 20 ausgehende und zum Einspritzmittel führende Flüssigkeitszuführung 21, 23 auf. In die Flüssigkeitszuführung 21, 23 ist zur Förderung der Flüssigkeit vom Behältnis 20 in das Einspritzmittel eine Pumpe 22 vorgesehen und zum Öffnen oder Absperren der Flüssigkeitszuführung 21, 23 ist ein Ventil 24 vorgesehen. Die Pumpe 22 kann durch eine Bypass-Leitung 26, welche ebenfalls mit einem Ventil 28 geöffnet oder gesperrt werden kann, umgangen werden.

Im vorliegenden Fall ist gemäß dem obigen Konzept zudem ein Substanzbehältnis 34 für eine Oberflächenspannung vermindernde Substanz vorgesehen und darüber hinaus eine vom Substanzbehältnis 34 ausgehende Substanzzuführung 31, die geeignet ist, der Flüssigkeit die Oberflächenspannung vermindernde Substanz zuzuführen.

In einer Weiterbildung der hier gezeigten Anordnungen 3, 5 der FIG 1 ist in der Substanzzuführung 31 eine Dosierpumpe 30 zum Dosieren der Oberflächenspannung vermindernden Substanz vorgesehen. Darüber hinaus weist die Substanzzuführung 31 ein Ventil 32 zum Öffnen der Substanzzuführung 31 auf.

Die hier gezeigten Anordnungen 3, 5 sehen eine Substanzzuführung 31 vor, welche zur Flüssigkeitszuführung 21, 23 führt. In einer hier nicht gezeigten Abwandlung der Anordnungen 3, 5 kann auch vorgesehen sein, dass die Substanzzuführung 31 direkt in ein Flüssigkeitsbehältnis oder ein Einspritzmittel mündet bzw. dorthin führt.

Gemäß der in FIG 1 im Detail gezeigten besonders bevorzugten ersten Ausführungsform 3 der Anordnung ist das Einspritzmittel in Form einer zwischen dem Ansaughaus 4 und dem Verdichter 10 angeordneten Eindüsanordnung 8 in Form eines Düsengestells gebildet. Das heißt, die Anordnung 3 sieht vor, dass die die Oberflächenspannung vermindernde Substanz enthaltende Flüssigkeit der Ansaugluft 2 bereits vor dem Verdichter 10, also im unverdichteten Zustand, zugesetzt wird. Dies hat den Vorteil, dass die die Oberflächenspannung vermindernde Substanz enthaltende Flüssigkeit besonders großflächig in die Ansaugluft 2 eingebracht werden kann. Aus diesem Grund wird auch eine besonders homogene Verteilung der Substanz in der Flüssigkeit möglich.

Eine etwas aufwändigere, aber mit besonderen Vorteilen versehene zweite besonders bevorzugten Ausführungsform 5 der Anordnung ist in der FIG 1 mittels der gestrichelt eingezeichneten geänderten Flüssigkeitszuführung 23 gezeigt. Das heißt, die Flüssigkeitszuführung 23 der Anordnung 5 führt zum Verdichter 10. Diese zweite Flüssigkeitszuführung 23, sieht alternativ oder zusätzlich zu einer Eindüsung der Flüssigkeit mit einer Eindüsanordnung 8 gemäß der Anordnung 3 vor, das Einspritzmittel über eine in der FIG 1 nicht im Detail gezeigten Leitschaufelkanalisation in einer Leitschaufel des Verdichters 10 zuzugeben. Die die Oberflächenspannung vermindernde Substanz enthaltende Flüssigkeit wird der Ansaugluft 2 also im bereits teilverdichteten Zustand im Verdichter zugesetzt. Dies lässt sich besonders zweckmäßig dadurch erreichen, dass in einer Leitbeschaufelung, gegebenenfalls auch in einer Laufbeschaufelung, eine Kanalisation vorgesehen ist, welche Öffnungen zum Luftstrom des Verdichters aufweist. Vorteilhaft sind solche Öffnungen im Bereich der Schaufelplattform anzubringen. Eine Kanalisation in einer Leitbeschaufelung kann ähnlich einer Kühlkanalisation ausgelegt sein. Es kann, soweit notwendig, auch eine Kühlkanalisation der Leitbeschaufelung des Verdichters 10 zum Einspritzen der die Oberflächenspannung vermindernde Substanz enthaltenden Flüssigkeit genutzt werden. Durch die in FIG 1 angedeutete zweite besonders bevorzugte Ausführungsform 5 der Anordnung lässt sich die Flüssigkeit besonders effektiv mit der Ansaugluft 2 vermischen.

Zusammenfassend wird vorliegend ein neuartiges Verfahren zur Leistungs- und Wirkungsgraderhöhung in einer Gasturbinenanlage 1 vorgeschlagen, bei dem eine Flüssigkeit in die Ansaugluft 2 eines Verdichters 10 der Gasturbinenanlage 1 eingespritzt wird. Um möglichst kleine Tropfendurchmesser zu erreichen wird vorgeschlagen, dass die Flüssigkeit eine Oberflächenspannung vermindernde Substanz enthält. Die Erfindung führt auch auf eine Anordnung 3, 5 zum Einspritzen von Flüssigkeit in die Ansaugluft 2 eines Verdichters 10 einer Gasturbinenanlage 1.

## Patentansprüche

1. Verfahren zur Leistungs- und Wirkungsgraderhöhung in einer Gasturbinenanlage (1), bei dem in eine Ansaugluft (2) eines Verdichters (10) der Gasturbinenanlage (1) eine Flüssigkeit eingespritzt wird,
**dadurch gekennzeichnet, dass**
die Flüssigkeit eine Oberflächenspannung vermindernde Substanz enthält.

2. Verfahren nach Anspruch 1,
**dadurch gekennzeichnet, dass**
die Oberflächenspannung vermindernde Substanz eine korrosionsvermindernde Substanz ist oder ein korrosionsverminderndes Additiv enthält.

3. Verfahren nach Anspruch 1 oder 2,
**dadurch gekennzeichnet, dass**
die Substanz ein Tensid ist.

4. Verfahren nach Anspruch 1 bis 3,
**dadurch gekennzeichnet, dass**
die Oberflächenspannung vermindernde Substanz Hochtemperatur korrosive Reaktionsprodukte bei der Verbrennung vermeidet.

5. Verfahren nach einem der Ansprüche 1 bis 4,
**dadurch gekennzeichnet, dass**
die Flüssigkeit zerstäubt wird.

6. Verfahren nach einem der Ansprüche 1 bis 5,
**dadurch gekennzeichnet, dass**
die Flüssigkeit Wasser ist.

7. Anordnung (3, 5) zum Einspritzen von Flüssigkeit in die Ansaugluft (2) eines Verdichters (10) einer Gasturbinenanlage (1) mit
- einem Einspritzmittel (8, 10)
- einem Flüssigkeitsbehältnis (20) und
- einer vom Flüssigkeitsbehältnis (20) ausgehenden und zum Einspritzmittel (8, 10) führenden Flüssigkeitszuführung (21),
**gekennzeichnet durch**
- ein Substanzbehältnis (34) für eine Oberflächenspannung vermindernde Substanz, und
- eine vom Substanzbehältnis (34) ausgehende Substanzzuführung (31), die geeignet ist, der Flüssigkeit die Oberflächenspannung vermindernde Substanz zuzuführen.

8. Anordnung (3, 5) nach Anspruch 7,
**dadurch gekennzeichnet, dass**
die Substanzzuführung (31)
- zum Flüssigkeitsbehältnis (20) und/oder
- zur Flüssigkeitszuführung (21) und/oder
- zum Einspritzmittel (8, 10) führt.

9. Anordnung (3, 5) nach Anspruch 7 oder 8,
**dadurch gekennzeichnet, dass**
das Einspritzmittel in Form einer zwischen einem Ansaughaus (4) und einem Verdichter (10) angeordneten Eindüsanordnung (8) gebildet ist.

10. Anordnung (3, 5) nach Anspruch 7 oder 8,
**dadurch gekennzeichnet, dass**
das Einspritzmittel in Form einer Leitschaufelkanalisation in einer Leitschaufel eines Verdichters (10) gebildet ist.

11. Gasturbinenanlage (1) mit einer Anordnung (3, 5) gemäß einem der Ansprüche 7 bis 10.
